# EUROPEAN PATENT APPLICATION

(11) **EP 4 485 757 A1**
(43) Date of publication of application: **01.01.2025**
(21) Application number: 23182788.2
(22) Date of filing: 30.06.2023
(51) Int. Cl.: H02K 3/38, H02K 3/52

(54) **METHOD FOR MANUFACTURING A STATOR-ASSEMBLY FOR AN ELECTRIC MACHINE**

(71) Applicant: MAHLE International GmbH, 70376 Stuttgart (DE)
(72) Inventor: ARCON, Ziga, 5292 Rence (SI); GOMISCEK, Matija, 5000 Nova Gorica (SI); MASERA, Sebastjan, 5292 Rence (SI); RUTAR, Erik, 5251 Grgar (SI); ZIBRET, Primoz, 3225 Planina pri Sevnici (SI)
(74) Representative: BRP Renaud & Partner mbB Rechtsanwälte Patentanwälte Steuerberater

(57) **Abstract**

The present invention relates to a method for manufacturing a stator-assembly (1) for an electric machine (100), which comprises a stator (2) and a busbar (4) for electrically connecting coils (6) of the stator (2) to a controller (101) of the electric machine (100).

Simplified and cost-effective manufacture with reduced cycle times is achieved by encasing the busbar (4) with an electrically insulating busbar material and then electrically connecting it to the coils (4), with joint sections (8) in which the coils (4) are electrically connected to the busbar (4) also being separately electrically insulated after said electrical connecting.

The invention also relates to a stator-assembly (1) manufactured in this way and to an electric machine (100) having such a stator-assembly (1).

## Description

The present invention relates to a method for manufacturing a stator-assembly for an electric machine. The invention further relates to a stator-assembly manufactured in this manner and to an electric machine having such a stator-assembly.

An electric machine has a stator comprising coils. The coils are used for the electromagnetic interaction of the stator with a rotor of the electric machine. The coils of the stator are usually electrically supplied and/or controlled by a controller of the electric machine. The electrical connection between the coils and the controller is usually made with a busbar. Usually, the busbar is arranged at an axial upper side of the stator and electrically connected to the coils. In addition, the busbar usually has plug sections to establish an electrical connection between the busbar and the controller.

In particular, in damp and wet environments, it is desirable to electrically insulate the electrically conductive components of the busbar and the connection points between the busbar and the coils.

From US 2010/0148615 A1 it is known to manufacture an assembly having the stator and the busbar. To manufacture the assembly, which is also referred to below as the stator-assembly, the busbar is arranged on the upper side of the stator. The busbar and the stator are then overmolded with an electrically insulating material.

US 2011/0215662 A1 proposes to fix the busbar to the upper side of the stator with a clip and then to overmold with an electrically insulating material.

From US 2015/0188376 A1 it is known to arrange the busbar on the upper side of the stator and to cover it with a casting mold, wherein an electrically insulating material is injected into the casting mold so that the material envelops the busbar.

The present invention is concerned with the problem of providing improved or at least alternative embodiments for a method for manufacturing a stator-assembly of the type mentioned above, as well as for such a stator-assembly and an electric machine having such a stator-assembly.

This problem is solved according to the invention by the object of the independent claims. Advantageous embodiments are the subject of the dependent claims.

The present invention is therefore based on the basic idea that, in order to manufacture an assembly comprising a stator and a busbar of an electric machine, the busbar is first overmolded with an electrically insulating material, the unit thus manufactured is arranged on the stator and electrically connected to the stator, and then the connection points between the stator and the busbar are overmolded with an electrically insulating material. Compared with variants known from the prior art, in which the busbar overmolded after being mounted on the stator, the solution according to the invention leads to simplified handling during manufacture and thus also to reduced manufacture time, i.e. to reduced cycle times during manufacture. In addition, the idea according to the invention leads to more precise sheathing of the busbar with the electrically insulating material. This leads to improved electrical insulation of the busbar. The subsequent overmolding of the connection points between the busbar and the stator also leads to precise electrical insulation, so that this can be simplified and implemented with reduced manufacturing time as well. In addition, there is thus reduced consumption of electrically insulating material. The solution according to the invention thus leads both to improved electrical insulation of the assembly and to a reduced cycle time in the manufacture of the assembly, and also to reduced manufacturing costs.

The assembly manufactured in this way is also referred to below as the stator-assembly.

According to the idea of the invention, the stator and the busbar are provided for manufacturing the stator assembly. The stator has an upper side in an axial direction. In addition, the stator has at least three coils. The respective coil is guided with a section on the upper side, this section also being referred to hereinafter as the coil section. The respective coil section is arranged in an associated section on the upper side, the respective such section on the upper side also being referred to hereinafter as the joint section. That is, the respective coil is arranged with a coil section in an associated joint section on the upper side. The busbar has an associated conductor for the respective coil, i.e. at least three conductors. Thus, the respective conductor is also associated with a coil section. The respective conductor has an associated section for the associated coil section, via which an electrical connection is made between the conductor and the coil section. The respective such section of the conductor is hereinafter also referred to as conductor section. In addition, the respective conductor has a further section spaced apart from the conductor section, via which an electrical connection is made to a controller of the associated electric machine. The respective such section of the conductor is also referred to hereinafter as the plug section. To manufacture the stator-assembly, the unit described above is first manufactured with the busbar and the electrically insulating material. This unit thus corresponds to a subassembly of the stator-assembly and is also referred to hereinafter as the busbar-subassembly. Manufacture of the busbar-subassembly includes casting the electrically insulating material over the busbar, which is also referred to hereinafter as the busbar material. Thus, the busbar-subassembly is manufactured by overmolding the busbar with the electrically insulating busbar material. This is done such that an electrically insulating sheath of the busbar material encases the busbar, whereas the respective conductor section is exposed and thus accessible. The busbar-subassembly is arranged on the upper side of the stator so that the respective conductor section is located in the joint section of the associated coil section. This is followed by electrically connecting the respective coil section to the associated conductor section in the associated joint section and casting an electrically insulating material over the respective joint section. This is done in such a way that at least one cap of the electrically insulating material electrically insulates the joint section and thus also the coil section and then conductor section. The electrically insulating material with which the at least one cap is made is hereinafter also referred to as cap material. That is, the respective joint section is overmolded with the electrically insulating cap material so that at least one cap made of the cap material electrically insulates the respective joint section.

The electrical connection of the respective coil section to the associated conductor section can be made in any way.

Advantageously, the respective coil section is electrically connected to the associated conductor section by means of resistance welding. This results in a mechanically stable and permanent electrical connection between the respective conductor and the associated coil.

The stator-assembly is used in an electric machine. A particularly advantageous synergy results in such an electric machine, which is used in wet and / or humid environments. The precise, simple, low-cost electrical insulation of the stator-assembly is particularly advantageous in such an application.

The electric machine can be, for example, an electric compressor which is used in an air-conditioning system, whereby the compressor, in particular the stator-assembly, can come into contact with coolant and/or refrigerant.

The electric machine, in particular the electric compressor, comprises a rotor in addition to the stator-assembly. The rotor rotates about an axial axis of rotation during operation.

The axial direction is therefore preferably a direction that is coaxial or parallel to the axis of rotation. In addition, the specified directions refer to the axial direction. Thus, "axial" means parallel or coaxial to the axial direction. The circumferential direction surrounds/circuits the axial direction. In addition, "radial" runs transverse to the axial direction.

The electric machine expediently further comprises the controller. The controller is used to electrically supply and/or control the coils of the stator. The busbar connects the coils electrically to the controller. Advantageously, the controller is arranged on the side of the busbar-subassembly axially facing away from the upper side. The electrical connection to the controller is established by electrically connecting the respective plug section to the controller. Preferably, this is a plug connection, preferably an axial plug connection.

Preferably, the electric machine for the controller has an associated housing, which is also referred to below as the controller housing. The controller is thus arranged in the controller housing. Preferably, the busbar, particularly the respective plug section enters the control housing and is electrically connected to the controller in the control housing.

Preferably, the busbar-subassembly seals the control housing.

In principle, it is conceivable to overmold all joint sections or at least two of the joint sections together so that an associated cap insulates all joint sections or at least two of the joint sections.

In preferred embodiments, at least two of the joint sections, preferably the respective joint section, are locally overmolded with the cap material so that they are each insulated with an associated cap. In other words, at least two joint sections, preferably the respective joint section, are/is locally overmolded with the cap material so that an associated cap insulates the respective joint section and the caps are spaced apart. Thus, there is a significant reduction in the amount of cap material required. As a result, manufacture of the stator-assembly is both less expensive and faster, i.e. with reduced cycle times.

The respective electrically insulating material, i.e. the busbar material and the cap material, can be any electrically insulating material.

For example, the busbar material is a plastic.

Preferably, the respective joint section is overmolded with a hotmelt adhesive as cap material, so that the at least one cap is manufactured by means of hotmelt. This leads to a mechanically robust manufacture of the caps.

Preferably, the at least one cap is mechanically harder than the sheath of the busbar-subassembly. Advantageously, the sheath is deformable, preferably elastically deformable, and the respective cap is rigid compared to the sheath.

The hotmelt adhesive is advantageously a polymer adhesive. This leads to simple and precise manufacture of the respective cap. At the same time, the respective cap thus exhibits increased mechanical stability/hardness and increased electrically insulating property.

If at least two joint sections are manufactured, each with an associated cap, it is possible to manufacture the caps one after the other. For example, one of the caps can be manufactured first and then the next cap.

In preferred embodiments, at least two of the caps, preferably all of the caps, are manufactured together. This leads to a further simplification of the manufacture of the stator-assembly. For this purpose, before the respective cap is manufactured, a unit with the stator and the busbar-subassembly is preferably manufactured in which the coil sections and the conductor sections are electrically connected. The unit is also referred to hereinafter as the stator unit. That is, the stator unit is manufactured before the respective cap is manufactured. To manufacture the stator unit, the busbar-subassembly is arranged on the upper side of the stator so that the respective conductor section is arranged in the joint section of the associated coil section. In addition, the respective coil section is electrically connected to the associated conductor section in the associated joint section. Then, the at least one cap is manufactured on the stator unit.

Preferably, the respective at least one cap is manufactured using an open casting mold. This leads to a simplified and precise manufacture of the respective cap. That is, a casting mold is provided for manufacturing the at least one cap. The casting mold has an associated depression for the respective joint section. The respective such depression is hereinafter also referred to as the cap depression. In addition, the casting mold has an open side opposite the cap depressions. The casting mold is arranged with the open side on the stator unit so that the respective cap depression surrounds the associated joint section. The cap material is then injected into the cap depressions to manufacture the caps.

The busbar assembly is advantageously manufactured in such a way that it has a carrier section and a plug interface. The carrier section has the conductor sections and extends radially and in a circumferential direction in a ring-like manner. The plug interface hast the plug sections and adjoins the carrier section, preferably projecting axially. The carrier section thus also includes at least parts of the sheath.

In preferred embodiments, at least one groove is formed in the sheath in the carrier section, which groove is open in the axial direction and extends transversely to the axial direction. The at least one groove is spaced from the respective conductor, thus does not establish an electrical connection of the conductor with the environment. Preferably, the carrier section is arranged on the upper side and mechanically connected to the stator, whereas the plug interface is loose with respect to the stator and axially spaced with respect to the stator, so that the plug interface is axially movable relative to the stator. Thus, there is a significant simplification of the mounting of the stator-assembly in the electric machine and a significant improvement of tolerance compensation. Thus, the electric machine can be manufactured at a lower cost and with reduced cycle time.

The plug interface, in preferred embodiments, is received is an electrically insulating base body from which the plug sections project axially. This leads to a simplified handling of the plug interface and thus to a simplified electrical connection of the stator-assembly to the controller and consequently a simplified assembly of the electric machine.

Advantageously the base body and the plug interface form a plug, particularly a male connector. This simplifies the mounting of the electric machine and in particular connecting the busbar to the controller.

The base body may be part of the busbar-subassembly.

Preferably, the base body may be manufactured by encapsulating the plug sections with the cap material. That is, the plug interface can be overmolded with the cap material so that the base body made of the cap material is manufactures, wherein the base body receives the plug sections and the plug sections) protrude from the base body. This results in further simplification and cost-effective manufacture of the stator-assembly.

Advantageous are embodiments in which the base body is also manufactured with the casting mold. This means that a casting mold is provided which has an associated depression for the base body, which is also referred to below as the base body depression. The casting mold is arranged with the open side on the stator unit so that the base body depression surrounds the plug sections. The cap material is injected into the base body depression and thus the base body is manufactured. Thus, there is a combined manufacture of both the at least one cap and the base body.

It is understood that, in addition to the method for manufacturing the stator-assembly, a stator-assembly so manufactured is also within the scope of the present invention.

It is further understood that the electric machine with the stator-assembly is also within the scope of the present invention.

Further important features and advantages of the invention are apparent from the dependent claims, from the drawings, and from the accompanying description based on the drawings.

It is understood that the above features and those to be explained below can be used not only in the combination indicated in each case, but also in other combinations or on their own, without departing from the scope of the present invention.

Preferred embodiments of the invention are shown in the drawings and will be explained in more detail in the following description, wherein identical reference signs refer to identical or similar or functionally identical components.

It shows, each schematically
- Fig. 1: a simplified sectional view through an electric machine with a statorassembly,
- Fig. 2: an isometric view of a stator of the stator-assembly,
- Fig. 3: an isometric view of a busbar-subassembly of the stator-assembly,
- Fig. 4: another isometric view of the busbar-subassembly,
- Fig. 5: an isometric view of a condition during manufacture of the statorassembly,
- Fig. 6: an isometric view in the region of a joint section of the state shown in Fig. 5,
- Fig. 7: an isometric view of the stator-assembly,
- Fig. 8: a spatial view of a casting mold for manufacturing the stator-assembly,
- Fig. 9: a spatial view of the stator-assembly in another exemplary embodiment,
- Fig. 10: a highly simplified, schematic diagram of an air conditioning system with the electric machine in a motor vehicle.

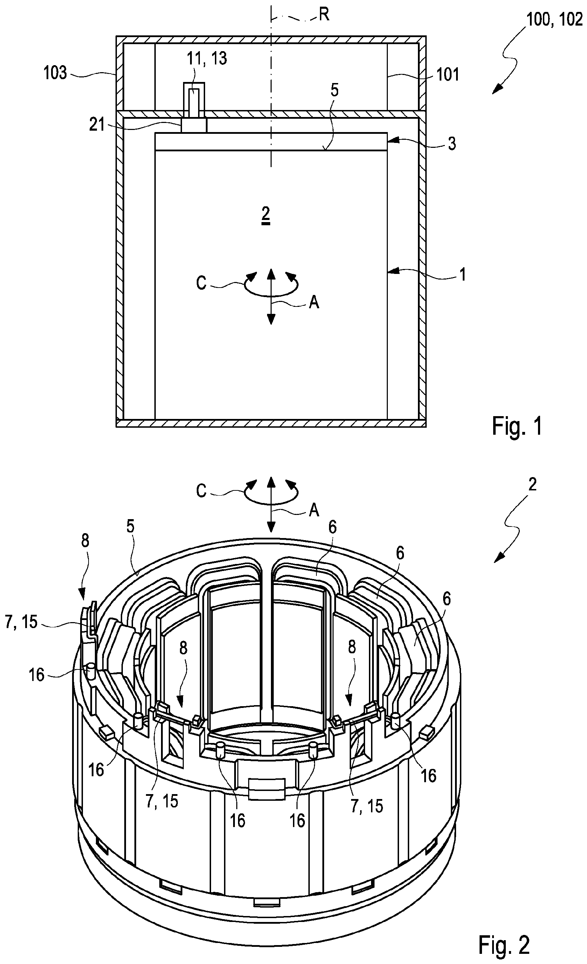

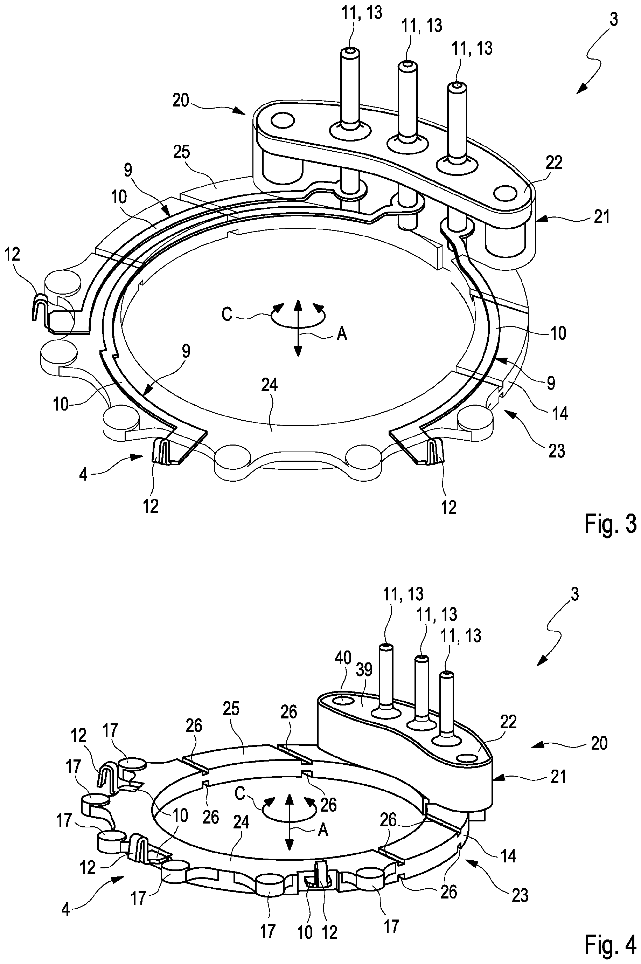

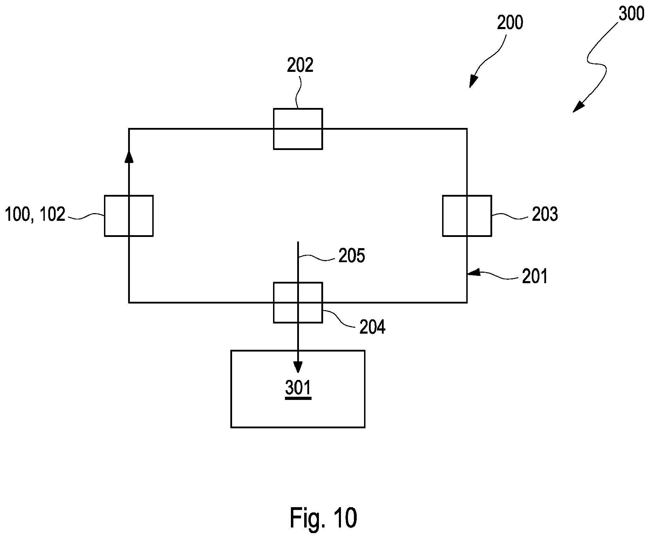

A stator-assembly 1, as exemplarily shown in Figures 1, 7 and 9, is used in an electric machine 100 exemplarily shown in Figures 1 and 10. The stator-assembly 2 comprises a stator 2 shown separately in Figure 2. The stator-assembly further comprises a subassembly 3 shown separately in Figures 3 and 4. The subassembly 3 comprises a busbar 4 and will also be referred to hereinafter as the busbar-subassembly 3. In operation, the stator 2 interacts with a rotor of the electric machine 100, which is not shown for simplicity, so that the rotor rotates about an axis of rotation R which is merely indicated in Figure 1. In operation, electromagnetic interaction occurs between the stator 2 and the rotor. For this purpose, the stator 2 is controlled and/or electrically supplied by means of a controller 101 of the electric machine 100. As can be seen from Figure 1, the controller 101 can be arranged in an associated housing 103 of the electric machine 100, which separates the controller 101 from the stator 2. The housing 103 is hereinafter also referred to as the control housing 103.

As can be seen in particular from Figure 2, the stator 2 has an upper side 5 in a direction A, which is also referred to below as the axial direction A. The stator 2 also has at least three coils 6 for electromagnetic interaction with the rotor. The stator 2 may, purely by way of example, have three such coils 6. The respective coil 6 is arranged with a section 7 on the upper side 5, which is also referred to hereinafter as the coil section 7. The respective coil section 7 is arranged in an associated section 8 of the upper side 5, which is also referred to hereinafter as joint section 8. The respective coil section 7 is thus arranged in an associated joint section 8 on the upper side 5. The coil sections 7 of the different coils 6 are spaced apart from one another, so that the joint sections 8 are also spaced apart from one another. In the exemplary embodiments shown, the coil sections 7 and thus also the joint sections 8 are spaced apart from each other in a circumferential direction C.

The busbar 4 of the busbar-subassembly 3 electrically connects the coils 6 of the stator 2 and the controller 101. As can be seen in particular from Figures 3 and 4, the busbar 4 (see in particular Figure 3) has an associated conductor 9 for the respective coil 6. Thus, the respective conductor 9 is assigned to the coil section 7 of the associated coil 6. As can be seen from Figure 3, the respective conductor 9 can be mulit-part. In the exemplary embodiments shown, the respective conductor 3 comprises, purely by way of example, a bar 10 extending substantially in the circumferential direction C and a pin 11 electrically and mechanically connected to the bar 10 and projecting axially. The pins 11 are shown in the figures in different variants. For the associated coil section 7, the respective conductor 9 has an associated section 12 for electrical connection to the coil section 7, which is also referred to below as conductor section 12. In the exemplary embodiments shown, the respective conductor section 12 is part of the bar 10 of the associated conductor 9. Purely by way of example, the respective conductor section 12 projects radially in the exemplary embodiments shown. The respective conductor 9 further comprises a section 13 spaced from the conductor section 12 for electrical connection to the controller 101, which is also referred to hereinafter as the plug section 13. In the exemplary embodiments shown, the respective pin 11 forms the plug section 13 of the associated conductor 9. Thus, as indicated in Figure 1, the busbar 4 is connected to the controller 101 by means of a plug-in connection in the axial direction A. For this purpose, the respective plug section 13 is arranged and accommodated in a plug interface 20 of the busbar-subassembly 3 in the exemplary embodiments shown. The plug interface 20 protrudes axially. In the stator-assembly 1, the plug interface 20 is part of a plug 21 which also has an electrically insulating base body 22 receiving the plug sections 13. The base body 22 thus accommodates the plug sections 13, in the exemplary embodiments shown the pins 11, with the plug sections 13 projecting axially from the base body 22. As can be seen from Figure 1, the busbar-subassembly 3 enters the controller housing 103 with the plug 21 to establish the electrical connection between the coils 6 and the controller 101, while also sealing the controller housing 103.

For manufacturing the stator-assembly 1, first the stator 2 and the busbar 4 are provided. It follows first the manufacture of the busbar-subassembly 3 and then attaching and connecting the busbar-subassembly 3 to the stator 2. Then, the respective joint section 8 is insulated.

The manufacture of the busbar-subassembly 3 is explained below with reference to Figures 3 and 4. In addition to the busbar 4, the busbar-subassembly 3 comprises an electrically insulating sheath 14 made of an electrically insulating material, which is also referred to below as the busbar material. The busbar material is, for example, a plastic with a certain mechanical flexibility. The sheath 14 thereby envelops the respective conductor 9 and thus insulates it, leaving the respective conductor section 12 exposed. In addition, the plug sections 13, i.e. the pins 11 in the exemplary embodiments shown, protrude radially from the sheath 14 axially. For better understanding, the sheath 14 is shown transparent or only in outline in Figure 3.

The busbar-subassembly 3 is thus manufactured by overmolding the busbar 4 with the busbar material, so that the electrically insulating sheath 14 made of the busbar material envelops/casts the busbar 4 and the respective conductor section 12 is exposed. This can be done, for example, by injection molding the busbar 4 with the busbar material.

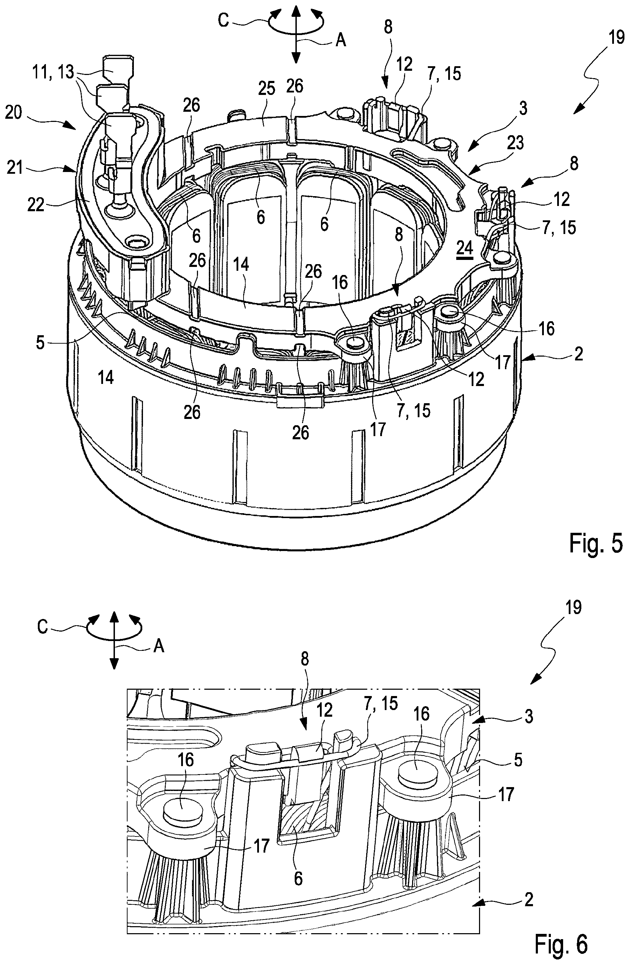

As indicated in Figures 5 and 6, the busbar-subassembly 3 is arranged on the upper side 5 of the stator 2 so that the respective conductor section 12 is arranged in the joint section 8 of the associated coil section 7. Furthermore, the respective coil section 7 is electrically connected to the associated conductor section 12 in the associated joint section 8. Figures 5 and 6 show a state after electrical connection of the respective conductor section 12 to the associated coil section 7. Figure 6 shows an enlarged section of one of the joint sections 8. As can be seen from Figure 6, the respective coil section 7 is formed by a wire 15 of the associated coil 6 in the exemplary embodiments shown. The electrical connection of the respective conductor section 12 to the associated coil section 7 can be made by resistance welding. As can be further seen from Figures 5 and 6, in the exemplary embodiments shown, the stator 2 has, purely by way of example, axially protruding adapters 16 on the upper side 5, which engage in associated receptacles 17 of the busbar-subassembly 3 in order to position the busbar-subassembly 3 relative to the stator 2. In the exemplary embodiments shown, the receptacles 17 are purely exemplary components of the sheath 14.

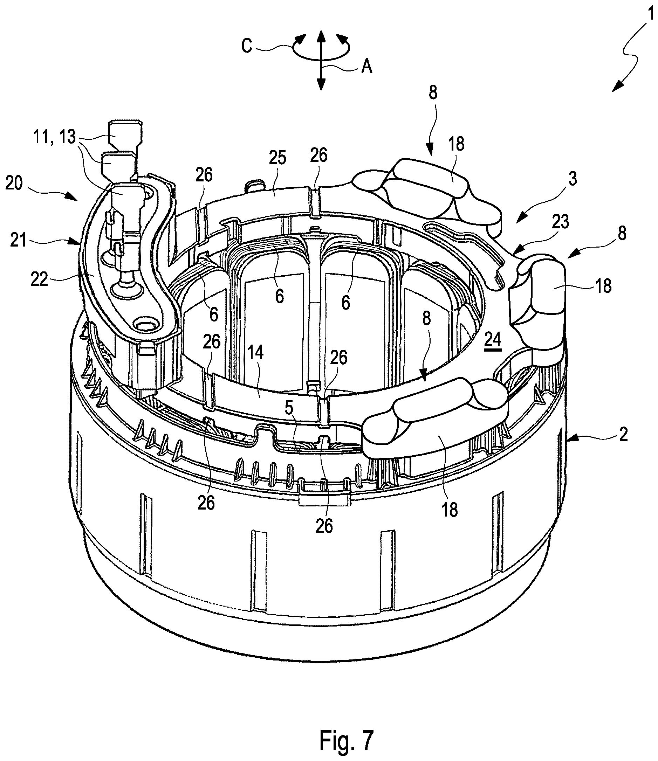

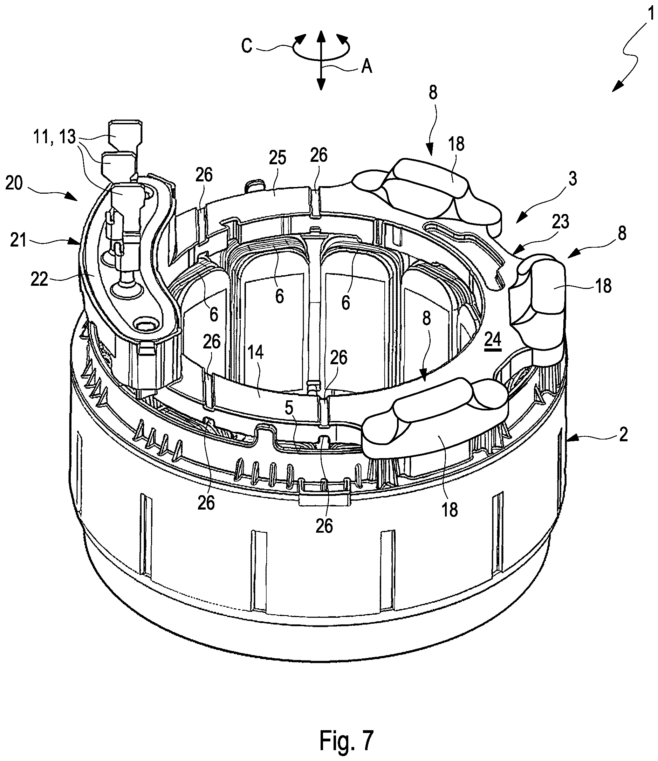

As can be seen in Figure 7, for example, after the electrical connection of the respective coil section 7 to the associated conductor section 12, the associated joint section 8 is insulated by means of at least one electrically insulating cap 18 made of an electrically insulating material, which is also referred to below as cap material. For this purpose, the respective joint section 8 is overmolded with the electrically insulating cap material, so that at least one cap 18 made of the cap material electrically insulates the joint section 8 and thus also the conductor section 12 and coil section 7 arranged in the joint section 8. In the exemplary embodiments shown, an associated cap 18 insulates the respective joint section 8. That is, the respective joint section 8 is locally overmolded with the cap material so that an associated cap 18 electrically insulates the respective joint section 8. The caps 18 are thus spaced apart from one another in the circumferential direction C in accordance with the spaced arrangement of the joint sections 8.

In the exemplary embodiments shown, the respective coil section 7 is first electrically connected to the associated conductor section 12 and then the at least one cap 18 is manufactured. Figures 5 and 6 thus show a unit 19 comprising the stator 2 and the busbar-subassembly 3, in which the respective coil section 7 is electrically connected to the associated conductor section 12. This unit 19 will also be referred to hereinafter as the stator unit 19.

In the exemplary embodiments shown, the axial direction A is coaxial with the axis of rotation R of the rotor. The directions indicated here refer to the axial direction A. Thus, "axial" runs coaxially or parallel to the axial direction A. The rotational axis R thus runs axially. Furthermore, "radial" radially runs transverse to the axial direction A. The circumferential direction C runs around the axial direction A.

In the exemplary embodiments shown, the respective cap 18 is manufactured by means of hotmelt bonding. That is, the respective joint section 8 is overmolded with a hotmelt adhesive as the cap material. The hotmelt adhesive is, for example, a polymer adhesive.

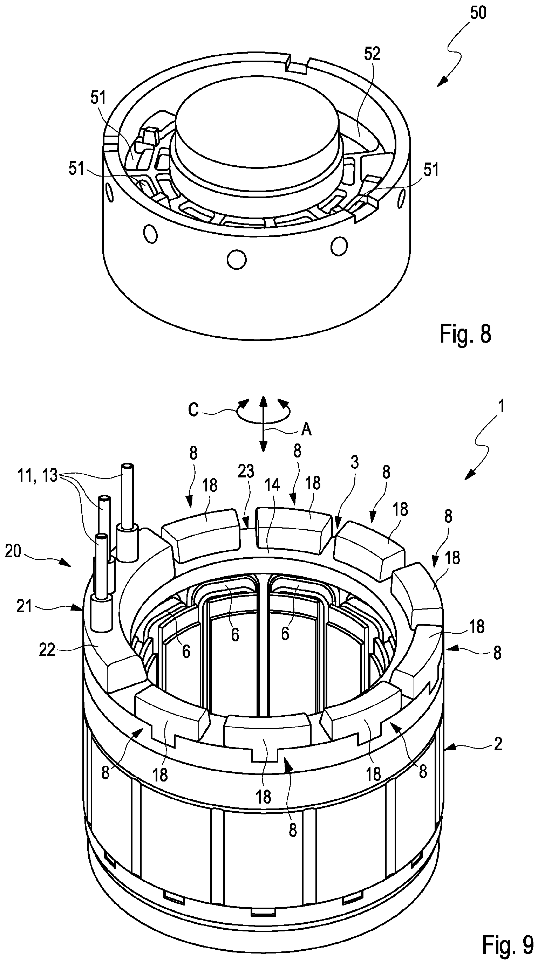

In the exemplary embodiments shown, the respective cap 18 is manufactured using a casting mold 50 shown as an example in Figure 8. The casting mold 50 has an associated depression 51 for the respective joint section 8 for manufacturing the associated cap 18, which is also referred to below as cap depression 51. The cap depressions 51 are thus spaced apart in accordance with the spaced apart arrangement of the joint sections 8. The casting mold 50 has an open side opposite the cap depressions 51, i.e., it is an open casting mold 50. To manufacture the caps 18, the casting mold 50 is arranged with the open side on the stator unit 19 so that the respective cap depression 51 surrounds the associated joint section 8 (not shown). The cap material is then injected into the cap depressions to manufacture the respective cap 18.

In the exemplary embodiments shown in Figures 1 to 7, the plug 21 is part of the busbar-subassembly 3.

As shown in Figure 9, the base body 22 of the plug 21 can alternatively be manufactured by casting the cap material around the plug interface 20 so that the base body 22 is made of the cap material. For this purpose, the casting mold 50 for the base body 22 has an associated depression 52, which is also referred to hereinafter as the base body depression 52. When the casting mold 50 is arranged with the open side on the stator unit 19, the base body depression 52 surrounds the plug interface 20. When the cap material is subsequently injected into the base body depression 52, the base body 22 is manufactured.

As can be further seen in Figure 9, the stator-assembly 1 may also have more than three joint sections 8, and thus more than three caps 18. In the exemplary embodiment shown in Figure 9, the stator-assembly 1 has, purely by way of example, eight such joint sections 8 and thus eight such caps 18.

As can be seen from Figures 3 and 4, for example, the busbar-subassembly 3 in the exemplary embodiments shown is manufactured in such a way that it has a carrier section 23 extending radially and in the circumferential direction C in a ring-like manner. The carrier section 23 comprises the conductor sections 12, in the exemplary embodiments shown with the bars 10. The plug interface 20 adjoins the carrier section 23 and protrudes axially. The busbar-subassembly 3 is mechanically connected to the stator 2 via the carrier section 23, for example via the adapters 16 and receptacles 17. That is, the receptacles 17 are part of the carrier section 23 in the exemplary embodiments shown. In contrast, the plug interface 20 and in particular the plug 21 are loose with respect to the stator 2 and axially spaced with respect to the stator 2, so that the plug interface 20 and in particular the plug 21 are axially movable relative to the stator 2. For this purpose, a first circumferentially extending segment 24 of the carrier section 23 is attached to the stator 2. That is, the segment 24 has the receptacles 17 in the exemplary embodiments shown. The segment 24 will also be referred to hereinafter as the connection segment 24. A segment 25 of the carrier section 23 adjoins the connection segment 24 is, which segment 25 is axially spaced from stator 2 and loosely arranged with respect to the stator 2 (see in particular Figure 5). This segment 25 is hereinafter also referred to as loose segment 25. The plug interface 20 and in particular the plug 21 are connected to the loose segment 25 and are radially and circumferentially spaced apart from the connection segment 24.

As can be seen, for example, from Figure 4, at least one groove 26 is formed in the carrier section 23 of the sheath 14. In the exemplary embodiments shown, the at least one groove 26 is formed in the loose segment 25 of the sheath 14. The respective groove 26 is open in the axial direction A and extends transversely with respect to the axial direction A. In the exemplary embodiments shown, purely by way of example, eight such grooves 26 are formed in the loose segment 25, with two such grooves 26 being axially opposed in each case. This results in a simplified axial deformation and movement of the loose segment 25. This results in a simplified axial mobility of the plug interface 20 and in particular of the plug 21.

The electric machine 100 can be operated reliably even in wet/damp environments. Accordingly, the electric machine 100 advantageously is used in wet/humid environments. For example, the electric machine 100 may be an electric compressor 102 for compressing a coolant or refrigerant.

As shown in simplified form in Figure 10, the electric machine 100 may be used as a compressor 102 in an air conditioning system 200 to compress a coolant or refrigerant circulating in the air conditioning system 200. Thus, the air conditioning system 200 includes a circuit 201 through which the coolant or refrigerant circulates in operation, the compressor 102 being included in the circuit 201 and compressing the coolant or refrigerant in operation. The air conditioning system 200 may further include a condenser 202 incorporated in the circuit 201 for condensing the coolant or refrigerant, an expander 203 incorporated in the circuit 201 for expanding the coolant or refrigerant, and an evaporator 204 incorporated in the circuit 201 for evaporating the coolant or refrigerant. An air flow 205 indicated by an arrow in Figure 10 may lead through the evaporator 204 to cool an interior space 301. The interior space 301 and the air conditioning system 200 may be part of a motor vehicle 300.

## Claims

1. Method for manufacturing a stator-assembly (1) for an electric machine (100),
- wherein a stator (2) is provided, said stator (2) comprising:
• in an axial direction (A) an upper side (5),
• at least three coils (6), the respective coil (6) being arranged with a coil section (7) in an associated joint section (8) on the upper side (5),
- wherein a busbar (4) is provided which has an associated conductor (9) for the respective coil (6),
• wherein the respective conductor (9) for the associated coil section (7) has a conductor section (12) and a plug section (13) spaced from the conductor section (12) for connection to a controller (101) of the electric machine (100),
- wherein a busbar-subassembly (3) is manufactured by overmolding the busbar (4) with an electrically insulating busbar material so that an electrically insulating sheath (14) of the busbar material envelops the busbar (4) and the respective conductor section (12) is exposed,
- wherein the busbar-subassembly (3) is arranged on the upper side (5) of the stator (2) so that the respective conductor section (12) is arranged in the joint section (8) of the associated coil section (7),
- wherein the respective coil section (7) in the associated joint section (8) is electrically connected to the associated conductor section (12) and the respective joint section (12) is overmolded with an electrically insulating cap material so that at least one cap (18) of the cap material electrically insulates the respective joint section (8).

2. Method of claim 1,
**characterized in**
**that** at least two joint sections (8) are locally overmolded with the cap material so that an associated cap (18) insulates the respective joint section (8) and the caps (18) are spaced apart.

3. Method according to claim 1 or 2,
**characterized in**
**that** the respective joint section (8) is overmolded with a hotmelt adhesive as a cap material so that the at least one cap (18) is manufactured by means of hotmelt.

4. Method according to claim 3,
**characterized in**
**that** the at least one joint section (8) is overmolded with a polymer adhesive as a hotmelt adhesive.

5. The method according to any one of claims 1 to 4,
**characterized in**
- **that**, prior to the manufacture of the respective cap (18), a stator unit (19) with the stator (2) and the busbar-subassembly (3) is manufactured **in that**
• the busbar-subassembly (3) is arranged on the upper side (5) of the stator (2) so that the respective conductor section (12) is arranged in the joint section (8) of the associated coil section (7),
• the respective coil section (7) in the associated joint section (8) is electrically connected to the associated conductor section (12),
- the at least one cap (18) is manufactured on the stator unit (19).

6. Method according to claim 5,
**characterized in**
- **that** a casting mold (50) is provided for manufacturing the at least one cap (18), which casting mold has an associated cap depression (51) for the respective joint section (8) and an open side opposite the at least one cap depression (51),
- **that** the casting mold (50) is arranged with the open side on the stator unit (19) so that the respective cap depression (51) surrounds the associated joint section (8),
- **that** the cap material is injected into the at least one cap depression (51) and thus the at least one cap (18) is manufactured.

7. Method according to any one of claims 1 to 6,
**characterized in,**
- **that** the busbar-subassembly (3) is manufactured in such a way that the busbar-subassembly (3) has a carrier section (23) with the conductor sections (12), the carrier section (23) extending radially and in a circumferential direction (C) in a ring-like manner and the busbar-subassembly (3) has a plug interface (20) with the plug sections (13) and adjoining the carrier section (23), preferably projecting axially,
- **that** at least one groove (26) is formed in the sheath (14) in the carrier section (23), which groove (26) is open in the axial direction (A) and extends transversely to the axial direction (A),
- **that** the carrier section (23) is arranged on the upper side (5) and connected to the stator (2), whereas the plug interface (20) is loose with respect to the stator (2) and axially spaced with respect to the stator (2) so that the plug interface (20) is axially movable relative to the stator (2).

8. Method of claim 7,
**characterized in**
**that** the plug interface (20) is overmolded with the cap material so that an electrically insulating base body (22) of the cap material receives the plug sections (20) and the plug sections (20) protrude from the base body (22).

9. Method of claim 8 and any one of claims 6 or 7,
**characterized in,**
- **that** a casting mold (50) is provided which has an associated base body depression (52) for the base body (22),
- **that** the casting mold (50) is arranged with the open side on the stator unit (19) so that the base body depression (52) surrounds the plug interface (20),
- **that** the cap material is injected into the base body depression (52) and thus the base body (22) is manufactured.

10. A stator-assembly (1) for an electric machine (100), in particular for an electric compressor (102), wherein the stator-assembly (1) is manufactured according to the method of any one of claims 1 to 9.

11. Electric machine (100), in particular electric compressor (102),
- with a stator-assembly (1) according to claim 10,
- with a rotor which rotates around an axial axis of rotation (R) during operation,
- with a controller (101) for supplying and/or controlling the coils (6) of the stator (2),
- wherein the busbar (4) electrically connects the respective coil (6) to the controller (101).

12. Electric machine (100) according to claim 11,
**characterized in**
**that** the electric machine (100) comprises a controller housing (103) in which the controller (101) is arranged, wherein the respective plug section (13) enters the controller housing (103) and is connected to the controller (101) in the controller housing (103).
